# DEMANDE DE BREVET EUROPEEN

(11) **EP 1 426 673 A2**
(43) Date de publication de la demande: **09.06.2004**
(21) Numéro de dépôt: 03293009.1
(22) Date de dépôt: 02.12.2003
(51) Int. Cl.: F17C 1/00, F17C 1/08

(54) **Réservoir pour fluides sous pression et procédé de fabrication**

(30) Priorité: 03.12.2002 FR 0215222
(71) Demandeur: Renault s.a.s., 92100 Boulogne Billancourt (FR); Witte Van Moort, 7670 AA Vrizenveen (NL)
(72) Inventeur: Heurtaux, Fabien, 78000 Versailles (FR); Lewin, Carl, 4250 Kopervik (NO)
(74) Mandataire: Davies, Owen Robert Treharne

(57) **Abrégé**

L'invention concerne un réservoir pour fluides sous pression comprend plusieurs alvéoles (1a, 1b, 1c) allongés parallèles juxtaposés, obturés à leurs deux extrémités longitudinales, caractérisé par le fait que chaque alvéole est défini par deux portions longitudinales opposées bombées (2) vers l'extérieur, reliées entre elles par deux portions longitudinales intermédiaires (3) opposées plates et parallèles, et en ce qu'un alvéole est défini par au moins deux profilés élémentaires (11, 12, 18, 19, 20, 21) longitudinaux assemblés suivant au moins deux lignes de soudure longitudinales (8).

## Description

La présente invention concerne le domaine des réservoirs pour fluides sous pression, par exemple pour le stockage de gaz et plus particulièrement de carburants tels que le gaz de pétrole liquéfié, appelé GPL, DME, gaz naturels adsorbés. Une autre application consiste dans le réservoir interne de réservoir cryogénique type LH2 et GNL.

On connaît par le document FR 2 766 906 un réservoir pour fluides sous pression, du type "matelas" destiné à être monté sur des véhicules automobiles, et constitué par plusieurs alvéoles en forme de cylindres tronqués juxtaposés.

Néanmoins, un tel réservoir constitué de cylindres présente des parois extérieures arrondies, de sorte que le volume intérieur du réservoir que l'on obtient n'est pas satisfaisant en regard du parallélépipède fictif dans lequel le réservoir s'inscrit, si l'on désire conserver la compacité du volume du logement du réservoir, notamment dans un véhicule automobile.

En outre, les parois du réservoir présentent en section une aire importante. La réalisation de tels réservoirs à partir de profilés extrudés en aluminium présente des difficultés en ce qui concerne la réalisation d'un profilé extrudé pouvant constituer toute la section d'un tel réservoir. Ceci est dû au fait que la taille et la puissance des presses d'extrusion disponibles limitent à l'heure actuelle la hauteur et la largeur des profilés extrudés à environ 250 mm. Des presses plus puissantes sont rares et les filières qui permettraient de réaliser des profilés extrudés de plus grande section sont d'un coût prohibitif.

Par ailleurs, il est nécessaire de disposer de plusieurs types de filières pour pouvoir réaliser des réservoirs de largeur et éventuellement de hauteur différentes. De tels outillages spécifiques sont d'un coût trop élevé, en particulier pour des faibles cadences de fabrication de réservoirs.

Le document WO-98/09876 propose un réservoir de carburant modulaire dans lequel les modules sont reliés par des pattes assemblés dans une gouttière. Une ligne de soudure soude les modules le long de la rainure formée par deux pattes adjacentes.

Le document US-6095367 propose un réservoir de carburant modulaire dans lequel les modules sont reliés ensemble par une chemise.

Le document GB-2032606 propose un réservoir de carburant modulaire dans lequel les modules sont reliés entre eux par une pièce annulaire soudés dans les zones de transition entre les modules.

Le document GB-2089014 propose un réservoir de carburant modulaire dans lequel les modules sont soudés ensemble en utilisant une pièce intermédiaire ayant la forme d'un Y.

La présente invention concerne un réservoir du type modulaire présentant pour un encombrement donné, un volume intérieur optimal et pouvant en particulier s'inscrire de façon optimale dans un volume parallélépipédique de faible hauteur, disponible dans un véhicule automobile.

L'invention concerne également un réservoir du type modulaire constitué par un nombre réduit de profilés extrudés différents qui peuvent être sélectionnés et assemblés en fonction de la largeur et de la hauteur des réservoirs à réaliser, autorisant ainsi une fabrication de réservoirs différents à des coûts réduits.

L'invention concerne un réservoir pour fluides sous pression comprend plusieurs alvéoles allongés parallèles juxtaposés, obturés à leurs deux extrémités longitudinales, caractérisé par le fait que chaque alvéole est défini par deux portions longitudinales opposées bombées vers l'extérieur, reliées entre elles par deux portions longitudinales intermédiaires opposées plates et parallèles, et en ce qu'un alvéole est défini par au moins deux profilés élémentaires longitudinaux assemblés suivant au moins deux lignes de soudure longitudinales.

Selon d'autres caractéristiques de l'invention :
- un profilé élémentaire comprend au moins une portion longitudinale de raccordement en Y ;
- un profile élémentaire en Y raccorde deux portions longitudinales bombées et une portion longitudinale plate interne ;
- des lignes de soudure longitudinales sont situées dans la zone des portions longitudinales bombées, dans la zone des portions longitudinales plates ou dans une zone de liaison des deux portions ;
- un profilé élémentaire comprend au moins une partie de portion longitudinale plate et/ou une partie de portion longitudinale bombée ;
- un profilé élémentaire comprend au moins une portion longitudinale de raccordement en Y, pour deux portions longitudinales bombées et une portion longitudinale plate interne.
- des profils comprennent des parties de portions bombées destinées à être soudées à des parties de portions bombées correspondant à d'autre profilés pour former une portion bombées d'un alvéole ;
- des portions longitudinales plates des alvéoles présentent une largeur au moins égale à la moitié de leur distance réciproque, et de préférence une largeur au moins égale à leur distance réciproque ;
- une portion longitudinale bombée présente une section en demi-cercle ou une section en anse de panier ou un profil symétrique analogue à flèche réduite ;
- un profilé comprend une portion longitudinale plate mince prévue pour être accolée à une autre portion longitudinale plate mince en formant une double paroi.

L'invention concerne en outre un procédé de fabrication de réservoirs modulaires, caractérisé par le fait qu'on fournit les profilés élémentaires nécessaires pour constituer les parois longitudinales des alvéoles des réservoirs à fabriquer, on définit un alvéole par au moins deux profilés élémentaires longitudinaux assemblés suivant au moins deux lignes de soudure longitudinales, on assemble par soudage longitudinal les profilés élémentaires fournis, on découpe l'ensemble ainsi constitué en tronçons ayant la longueur nécessaire pour chaque réservoir à réaliser, et on obture chaque tronçon à ses extrémités par des pièces d'extrémité fixées par soudage.

Les profilés, selon le procédé, ont de préférence une longueur correspondante à la longueur de plusieurs réservoirs.

Notamment dans le cas de profilés extrudés en aluminium ou en alliage d'aluminium, l'assemblage des profilés peut se faire avantageusement par soudage par friction, ou également par soudure laser. Ces deux types de soudage sont plus performants pour les assemblages linéaires et présentent une qualité de soudure très bonne, sans surépaisseur, par rapport à la soudure classique type TIG (« Tungston Inert Gas ») ou MIG (« Metal Inert Gas »).

Selon une caractéristique du procédé, la partie interne de la zone de liaison vient s'appuyer sur un renfort interne pendant l'opération de soudage.

Selon une autre caractéristique du procédé, on forme une portion bombée d'un alvéole en utilisant des profiles comprenant des parties de portions bombées destinées à être soudées à des parties de portions bombées correspondant.

L'utilisation d'une part de profilés extrudés en aluminium et d'autre part du soudage par friction pour l'assemblage des profilés permet de créer une zone de liaison dont les caractéristiques mécaniques globales sont quasiment d'aussi bonne qualité que celles d'une section de profilé sans liaison. L'assemblage ainsi réalisé conserve de bonnes propriétés en allongement à rupture, un niveau élevé de contrainte à rupture, une bonne tenue à la fatigue cyclique sous pression.

Un épaississement local peut être réalisé dans la partie externe du profilé dans la zone affectée thermiquement par le soudage par friction. La partie interne de la zone de liaison vient s'appuyer sur un renfort interne pendant l'opération de soudage. Ceci permet d'obtenir sur le côté interne un assemblage très lisse, qui par la suite favorise l'assemblage des pièces d'extrémité servant à fermer les alvéoles du réservoir aux deux extrémités. Ces pièces d'extrémité peuvent être des pièces embouties fixées par soudage, par exemple par des procédés classiques type MIG ou TIG.

Compte tenu de la réalisation des soudures longitudinales sur les profilés rectilignes, ce mode d'assemblage est peu coûteux et peut être avantageusement automatisé.

Bien entendu, le procédé conforme à l'invention peut être utilisé également pour la réalisation de réservoirs à partir de tôles d'acier, avec raboutage des tôles par soudage à la molette ou par soudage laser.

La présente invention sera mieux comprise à l'étude de la description détaillée de modes de réalisation pris à titre d'exemple nullement limitatifs et illustrée par les dessins annexés, sur lesquels :
- la figure 1 est une vue en coupe transversale d'un mode de réalisation de deux profilés extrudés susceptibles d'être assemblés en un réservoir pour fluides sous pression ;
- la figure 2 est une coupe d'un troisième profilé susceptible d'être intercalé entre les deux profilés de la figure 1, en vue de la constitution d'un réservoir de plus grande largeur ;
- la figure 3 est une coupe de deux profilés susceptibles d'être assemblés entre eux et avec au moins un troisième profilé en vue de la réalisation d'un réservoir ;
- la figure 4 et une coupe de quatre profilés susceptibles d'être assemblés entre eux pour l'obtention d'un profilé selon la figure 1, en vue de la réalisation d'un réservoir ;
- la figure 5 est une coupe d'un autre mode de réalisation de profilés susceptibles d'être assemblés en un réservoir pour fluides sous pression ;
- la figure 6 est une vue en coupe transversale de deux profilés à profils fermés prévus pour être accolés ;
- la figure 7 est une vue de détail de la figure 6 ;et
- les figures 8 à 11 sont des vues en coupe longitudinale illustrant des possibles fixations d'éléments d'obturation prévues pour fermer les extrémités des alvéoles.

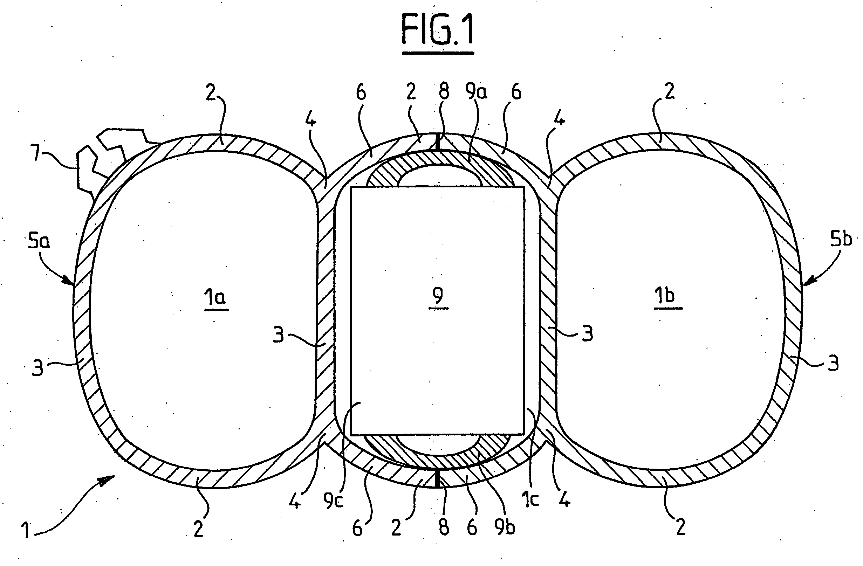

Sur la figure 1, le réservoir, référencé 1 dans son ensemble, comprend trois alvéoles allongés parallèles juxtaposés dans un plan, à savoir deux alvéoles extérieurs 1a, 1b et un alvéole intérieur 1c. Seule la section des alvéoles 1a, 1b, 1c est représentée sur la figure 1. Les alvéoles 1a, 1b, 1c s'étendent longitudinalement selon une direction perpendiculaire au plan de la figure 1.

Chaque alvéole 1a, 1b, 1c est délimité par une paroi longitudinale comprenant deux portions longitudinales extérieures 2 bombées vers l'extérieur, qui présentent dès lors une concavité orientée vers l'intérieur de l'alvéole, et deux portions longitudinales intermédiaires 3 opposées. Les portions bombées 2 présentent un profil en anse de panier à flèche réduite.

Les portions intermédiaires 3 comprennent des portions intermédiaires externes bombées, sur le côté extérieur des alvéoles extérieures 1a, 1b, se raccordant par chacun de leurs bords longitudinaux à une seule portion extérieure bombée 2, et des portions intermédiaires internes 3 plates et parallèles entre elles qui sont communes à deux alvéoles adjacents (1a, 1c et 1b, 1c) et qui se raccordent par chacun de leurs bords longitudinaux à deux portions extérieures bombées 2 de deux alvéoles adjacents 1a, 1c et 1b, 1c, par des portions de raccordement 4 en Y.

Le réservoir 1 comprenant trois alvéoles 1a, 1b, 1c est composé de deux profilés 5a, 5b dont chacun définit un alvéole d'extrémité 1a, 1b complète flanquée d'un côté d'une moitié de l'alvéole intermédiaire 1c.

Chaque profilé 5a, 5b comprend deux portions extérieures bombées 2 opposées reliées par une portion intermédiaire externe 3 et une portion intermédiaire interne 3 parallèles, la portion intermédiaire interne 3 étant reliée par chacun de ses bords longitudinaux à une portion extérieure bombée 2 et une partie de portion extérieure bombée 6 par l'intermédiaire d'une portion de raccordement 4 en Y, la partie de portion bombée s'étendant du côté du plan défini par la portion longitudinale 3 opposé à la portion longitudinale bombée 2.

Le profilé 5a diffère du profilé 5b uniquement par la prévision, à l'extérieur, de moyens de supportage 7 qui peuvent être formés d'une seule pièce avec le profilé 5a, ou soudé sur le profilé 5a. Dans le cas où, suivant un mode de réalisation préféré, les profilés 5a et 5b sont des profilés extrudés, les moyens de supportage 7 peuvent être extrudés en continu d'une seule pièce avec le profilé 5a.

Les deux profilés 5a et 5b sont assemblés par deux soudures longitudinales continues 8, par jonction des bords longitudinaux libres des parties de portions extérieures 6 des deux demi-alvéoles des profilés 5a, 5b, les deux demi-alvéoles des deux profilés 5a, 5b définissant ainsi l'alvéole interne 1c. On obtient un réservoir 1 à trois alvéoles et présentant deux cordons de soudures longitudinaux 8 situés sur les portions extérieures bombées 2 de l'alvéole central 1c.

On notera sur la figure 1 la présence d'un élément 9 de support et de renfort interne, qui est utilisé pendant l'opération de soudure des deux profilés 5a, 5b pour obtenir un assemblage interne lisse. L'élément de support 9 comprend deux profilés d'appui 9a, 9b, par exemple en acier, en contact avec les surfaces internes de deux parties de portions bombées 6 des profilés 5a, 5b amenés en contact, par l'intermédiaire d'une portion de surface épousant les surfaces des parties de portions bombées 6 à leur extrémité libre. Un élément d'appui central 9c est disposé entre les profilés d'appui 9a, 9b pour les soutenir pendant des opérations de soudage. L'élément central d'appui 9c peut se présenter sous la forme d'un poche gonflable pour exercer un effort d'appui sur les profilés d'appui 9a, 9b par gonflage de la poche. Les profilés d'appui 9a, 9b permettent la réalisation de jointure lisse du côté interne des cordons de soudure 8. De préférence, les profilés d'appui 9a, 9b sont utilisés aux extrémités des alvéoles pour faciliter la fixation ultérieure d'éléments d'obturation. Les soudures rectilignes 8 peuvent être réalisées de préférence par soudage par friction ou par soudage laser.

On notera également que les portions intermédiaires 3 sont munies de perçages non visibles sur la figure 1, pour la communication des alvéoles 1a, 1b, les perçages permettant la circulation d'un fluide dans le réservoir, entre les alvéoles. De façon générale, les portions longitudinales plates internes prévues pour séparer deux alvéoles adjacents sont avantageusement munies de perçages pour la communication fluidique.

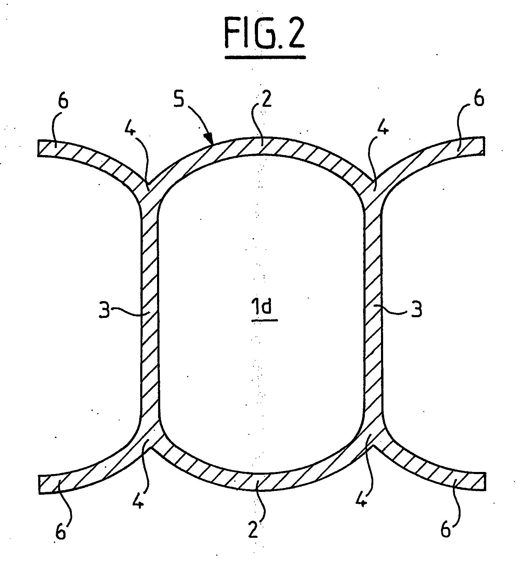

La figure 2 représente un troisième profilé 5c qui peut être utilisé en combinaison avec les deux profilés 5a et 5b de la figure 1, en étant intercalé entre ces derniers, pour former un réservoir à cinq alvéoles juxtaposés.

Le profilé 5c comprend une paroi longitudinale définissant un alvéole 1d intermédiaire complet flanqué de chaque côté d'un demi-alvéole dont chacun est adapté pour compléter le demi-alvéole d'un des profilés externes 5a, 5b.

Le profilé 5c comprend deux portions externes 2 bombées opposées, reliées par deux portions intermédiaires internes 3, pour former l'alvéole complet 1d. Les portions intermédiaires internes 3 sont reliées par chacun de leurs bords longitudinaux à une portion externe bombée 2 de l'alvéole intermédiaire 1d, et à des parties de portions externes bombées 6, par l'intermédiaire de portions de raccordement 4 en Y.

Lorsque le troisième profilé 5c est intercalé entre les profilés 5a, 5b de la figure 1, les portions intermédiaires internes 3 sont chacune communes à l'alvéole intermédiaire 1d et à un alvéole adjacent formé avec un profilé 5a, 5b selon la figure 1.

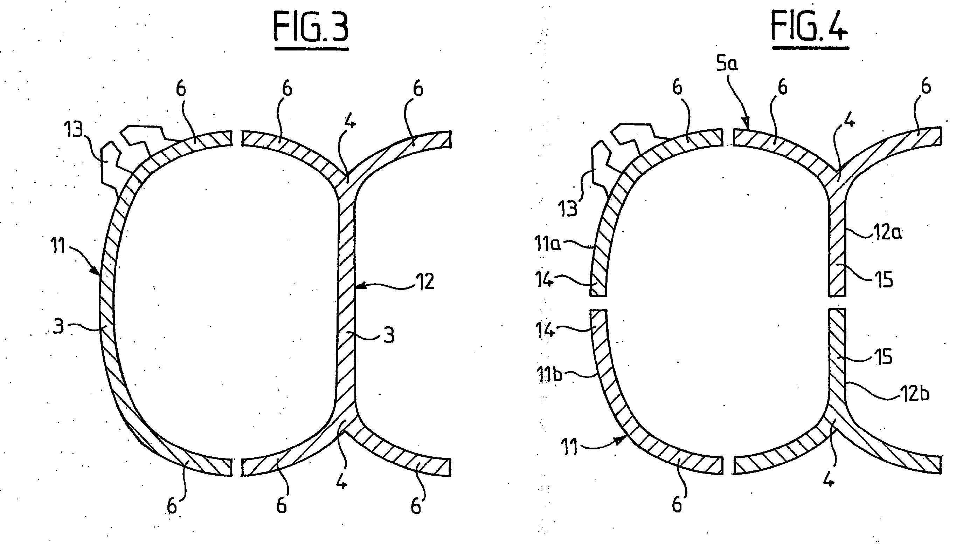

Sur les figures 3 à 5, on a représenté des profilés obtenus à partir de l'assemblage de plusieurs profilés élémentaires, des profilés élémentaires prévus pour être assemblés étant représentés légèrement espacés, afin de mieux distinguer chaque profilé élémentaire.

Sur la figure 3, où les références aux éléments semblables à ceux des figures 1 et 2 ont été reprises, deux profilés 11, 12 permettent, lorsqu'ils sont associés, de définir un alvéole et un demi-alvéole. En d'autres termes, les profilés 11 et 12, lorsqu'ils sont associés, permettent de former un profilé du type des profilés 5a, 5b de la figure 1.

Un profilé élémentaire externe 11 comprend une portion longitudinale bombée intermédiaire externe 3 prolongée sur chacun de ses bords longitudinaux par une partie de portion longitudinale bombée 6.

Le profilé externe 11 définit un demi-alvéole d'extrémité latérale de réservoir. Le profil externe 11 est prévu avec des moyens de supportage 13 qui peuvent être d'une seule pièce avec le profilé externe 11, ou soudés sur le profilé externe 11.

Un profilé élémentaire intermédiaire 12 comprend une portion longitudinale plate intermédiaire interne 3 reliée à chacun de ses bords longitudinaux à deux parties de portion bombée 6 s'étendant de part et d'autre du plan défini par 1a portion interne 3, deux parties de portion bombée 6 étant reliées à un bord longitudinal d'une portion intermédiaire interne 3 par l'intermédiaire d'une portion de raccordement 4 en Y. Le profilé intermédiaire 12 définit deux demi-alvéoles de part et d'autre de la portion intermédiaire interne 3.

Le profilé élémentaire externe 11 peut être associé au profilé élémentaire intermédiaire 12 en accolant les bords libres de parties de portions bombées 6 des profilés externe 11 et intermédiaire 12 et en formant des cordons de soudure. On obtient un profilé 5a, 5c selon la figure 1 présentant un cordon de soudure longitudinal sur ses portions extérieures bombées 2

Le profilé intermédiaire 12 peut être intercalé entre des profils 5a, 5b de la figure 1, et/ou des profilés externes 11. Le profil intermédiaire 12 permet d'ajouter aisément un alvéole supplémentaire au réservoir, et ainsi d'augmenter la largeur du réservoir.

Sur la figure 4, où les références aux éléments semblables à ceux de la figure 3 ont été reprises, un profilé 5a du type de la figure 1 est obtenu par assemblage de profilés élémentaires 11a, 11b formant lorsqu'ils sont assemblés un profilé du type du profilé externe 11 (fig. 3), et de profilés élémentaires 12a, 12b formant lorsqu'ils sont assemblés un profilé du type du profilé intermédiaire 12 (fig. 3).

Les profilés 11a, 11b pour former un profilé externe 11 comprennent chacun une partie de portion longitudinale plate intermédiaire externe 14 prolongée sur un bord longitudinal par une partie de portion longitudinale externe bombée 6. Les profilés 11a, 11b peuvent être accolés par les bords longitudinaux libres des parties de portion intermédiaire plate 14 pour former un profilé externe 11 (fig. 3.) de demi-alvéole. Les profilés 11a, 11b diffèrent par le fait que le profilé 11a est prévu avec des moyens de supportage 13 pouvant être formés intégralement avec le profilé 11a ou soudés sur le profilé 11a.

Les profilés élémentaires 12a, 12b pour former un profilé intermédiaire 12b définissent chacun deux quarts d'alvéole et comprennent chacun une partie de portion intermédiaire plate 15 reliée par un bord longitudinal à deux parties de portion bombées 6, par l'intermédiaire d'une portion de raccordement 4 en Y. Les deux profils 12a, 12b peuvent être accolés par les bords longitudinaux libres des parties de portion intermédiaire plate 15 pour former un profilé intermédiaire 12 selon 1a figure 3.

Les profilés externe 11 et intermédiaire 12 obtenus par assemblages de profilés élémentaires 11a, 11b, 12a, 12b par des bords libres de parties de portion intermédiaire bombée 14 et plate 15 présentent des cordons de soudure sur leurs portions intermédiaires plates 3.

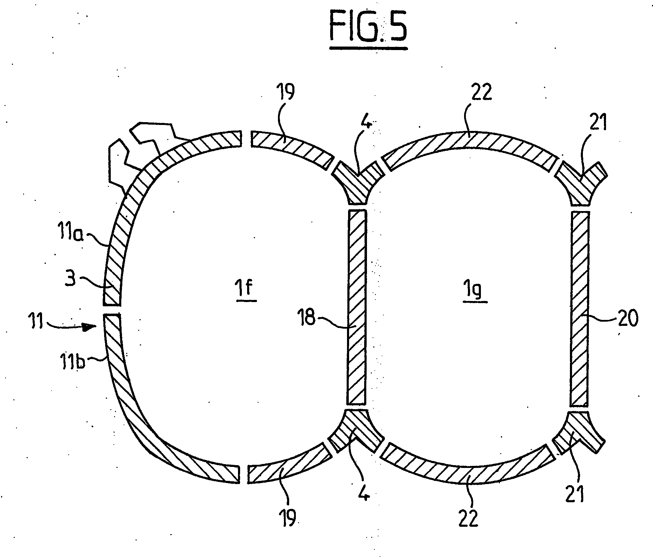

Sur la figure 5, où les références aux éléments semblables à ceux de la figure 4 ont été reprises, une partie de réservoir comprenant un alvéole externe 1f et un alvéole intermédiaire 1g, est obtenu assemblage de différents profilés élémentaires entre eux.

L'alvéole externe 1f est défini en partie par un profilé externe 11 obtenu par assemblage de deux profilés élémentaires 11a, 11b selon la figure 4. Un profilé rectiligne 18, de hauteur égale à la hauteur de la portion longitudinale bombée externe 3 du profilé externe 11 est disposé parallèlement en regard de la portion longitudinale bombée externe 3 du profilé externe 11 du côté des parties de portion bombée 6. Le profilé rectiligne 18 est accolé et soudé à chacun ses bords longitudinaux à des profilés de raccordement 4 présentant en section un profil en Y à branches courtes. Des profilés de partie de portion bombée 19 sont accolés et soudés par leurs bords longitudinaux aux extrémités libres des branches des profilés de raccordement 4 situées du côté du profilé 11 et du côté opposé aux bords libres des parties de portion bombée 6 du profilé externe 11.

L'alvéole intermédiaire 1g est délimité d'une part par le profilé rectiligne 18 et les profilés de raccordement 4 associés, ainsi que par un second profilé rectiligne 20 opposé au profilé rectiligne 18 et parallèle à ce dernier, accolé et soudé par ses bords longitudinaux à des seconds profilés de raccordement 21 en Y, et des profilés de portions bombées 22 disposés entre les extrémités libres des branches des premiers profilés de raccordement 4 associées au premier profilé rectiligne 18, orienté du côté opposé au profilé externe 11, et les extrémités libres des branches des profilés de raccordement 21 associés au profilé rectiligne 20 orienté du côté du premier profilé rectiligne 18

Ainsi, l'alvéole externe 1f et l'alvéole intermédiaire 1g sont formées à partir de différents profilés élémentaires parmi lesquels des profilés rectilignes 18, 20 formant des portions intermédiaires plates, des profilés extérieurs bombés 19, 22 formant tout ou partie de portions bombées externes, des profilés de raccordement 4, 21 en Y, et des profilés 11a, 11b selon la figure 4 adapté pour former un profilé externe 11.

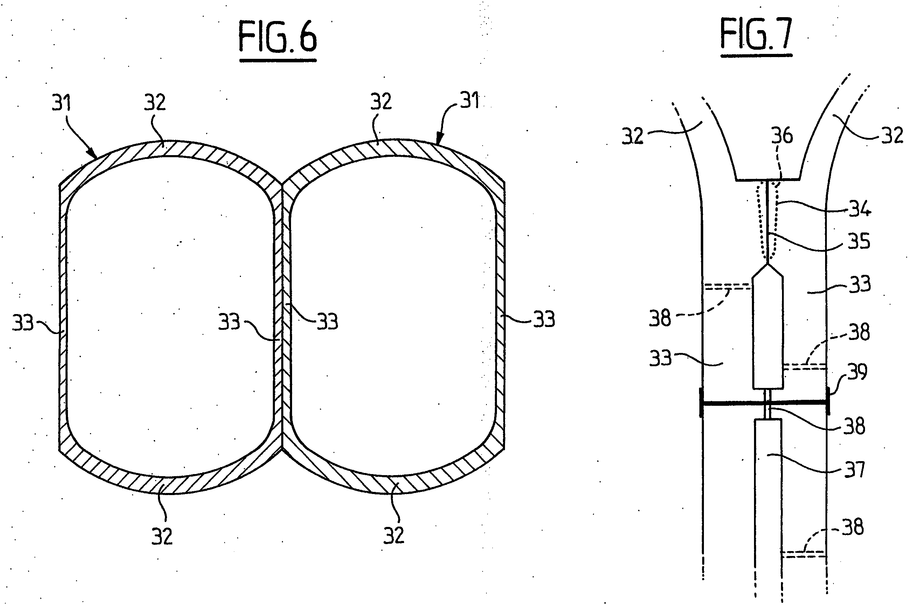

Sur la figure 6, deux profilés 31 similaires présentent chacun un profil fermé définissant un alvéole. Un profilé 31 comprend deux portions longitudinales extérieures bombées 32 opposées, reliées par deux portions longitudinales intermédiaires 33 plates. Les profilés 31 sont accolés latéralement en amenant en contact des portions longitudinales plates intermédiaires 33, présentant une épaisseur plus mince que l'épaisseur des portions longitudinales bombées 32.

Comme on peut mieux le voir sur la figure 7, les portions intermédiaires 33 accolées présentent à leurs extrémités supérieures et inférieures (non représentées) des surépaisseurs 34 en saillie vers l'extérieur des alvéoles, et présentant une surface plate 35 prévue pour un contact mutuel. Les profilés 31 sont accolés par les surépaisseurs 34 de portions longitudinales plates intermédiaires 33, les surépaisseurs 34 étant ensuite soudés mutuellement par friction ou par laser, conduisant à la formation d'un cordon de soudure 36. On obtient ainsi des alvéoles séparés par une double paroi présentant une cavité intermédiaire 37. Des perçages 38 sont prévus dans les portions longitudinales plates intermédiaires 33 pour la communication fluidique des alvéoles entre eux, par l'intermédiaire de la cavité intermédiaire 37.

L'assemblage des profilés 31 peut être renforcé en ajoutant des moyens de fixation par rivets 39 traversant la double paroi.

L'assemblage des alvéoles avec formation d'un double paroi intermédiaire permet d'utiliser, notamment pour des alvéoles intermédiaires, des profilés monoblocs comprenant des parois d'épaisseur réduite pour minimiser la section des parois du profilé afin de pouvoir fabriquer le profilé à partir d'outillage courant de coût non prohibitif.

On a décrit des exemples de profilés élémentaires. Bien entendu, on peut prévoir d'autres types de profilés élémentaires monobloc, comprenant seul ou en association de parties de portions longitudinales bombées, de parties de portions longitudinales plates, ou de portions de raccordement. Les profilés élémentaires seront choisis pour permettre une fabrication facile de chaque profilé, et un assemblage simple pour obtenir un réservoir, ou permettre une grande modularité du réservoir, notamment pour augmenter sa hauteur ou sa largeur.

Pour la fabrication d'un réservoir modulaire, on sélectionne les profilés élémentaires nécessaires pour constituer les parois longitudinales des alvéoles des réservoirs à fabriquer, les profilés ayant de préférence une longueur correspondante à la longueur de plusieurs réservoirs, on assemble par soudage longitudinal les profilés élémentaires sélectionnés, on découpe l'ensemble ainsi constitué en tronçons ayant la longueur nécessaire pour chaque réservoir à réaliser, et on obture chaque tronçon à ses extrémités par des pièces d'extrémité fixées par soudage.

On obtient alors des réservoirs présentant, selon les profilés élémentaires que l'on a choisi, des soudures longitudinales sur des portions longitudinales extérieures bombées, des portions longitudinales intermédiaires plates, ou des portions de raccordement.

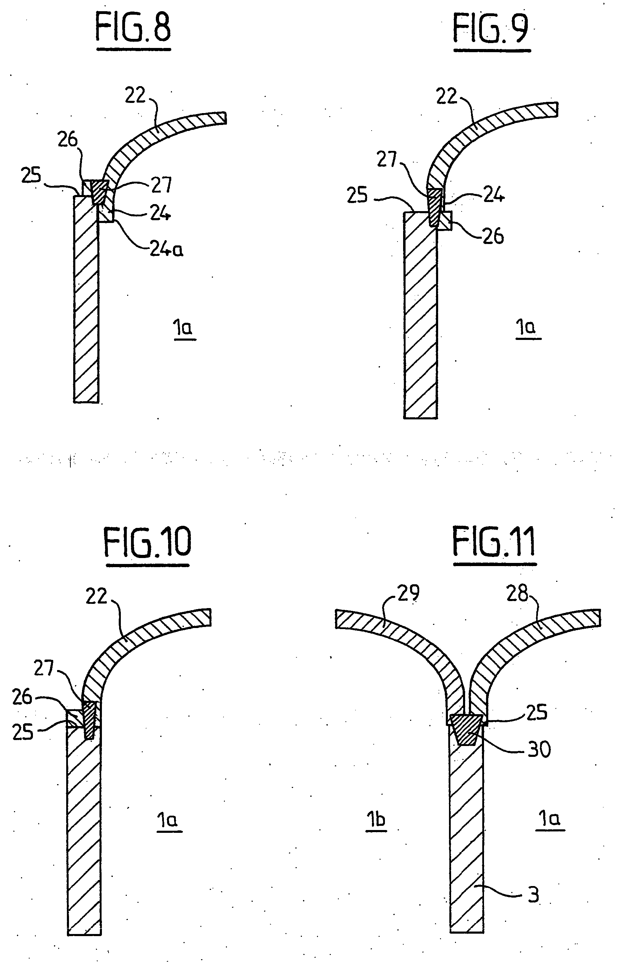

Des moyens d'obturation des extrémités longitudinales des alvéoles sont décrits par la suite en référence aux figure 8 à 11, en reprenant les références aux éléments semblables à ceux des figures précédentes.

Sur la figure 8, un alvéole 1a, représenté partiellement en coupe longitudinale, sensiblement un quart de l'alvéole la étant visible, est fermé à une extrémité longitudinale par une calotte 22 bombée vers l'extérieur de l'alvéole 1a et soudée à l'extrémité de l'alvéole 1a.

La calotte 22 peut être obtenue par exemple par emboutissage. La calotte 22 comprend bord libre 24 présentant un profil correspondant au profil de la section transversale de l'alvéole 1a.

Pour fermer l'alvéole 1a, le bord 24 est inséré dans l'alvéole 1a, une surface extérieure 24a du bord 24 étant ajustée sur la surface intérieure de l'alvéole 1a. Une couronne de renfort 26 est accolée à la surface frontale d'extrémité 25 des parois longitudinales de l'alvéole 1a et entoure 1a calotte emboutie 22 en partie insérée dans l'alvéole 1a. Les parois longitudinales de l'alvéole 1a, la calotte emboutie 22 et la couronne 26 sont fixées lors d'une seule opération par un cordon de soudage représenté par un noircissement 27.

Sur la figure 9, où les références aux éléments semblables à ceux de la figure 8 ont été reprises, un alvéole 1a est fermé à une extrémité par l'intermédiaire d'une calotte emboutie 22, dont le bord libre 24 est amené en contact avec les surfaces d'extrémité frontale 25 des parois délimitant longitudinalement l'alvéole 1a. Le bord 24 de la calotte emboutie 22 présente un profil de dimensions dans un plan transversal sensiblement supérieures à celles du profil de l'alvéole 1a. Le bord libre 24 de la calotte emboutie 22 est en partie en contact avec les surfaces d'extrémité 25 et en partie en saillie à l'intérieur de l'alvéole 1a. Une couronne intérieure 26 de renfort de forme correspondante au profil de l'alvéole 1a en section transversale est ajustée dans l'alvéole en venant par sa surface extérieure en contact avec la surface intérieure de l'alvéole 1a, et en étant en contact avec le bord libre de la calotte emboutie 22.

La couronne de renfort intérieure 26, 1a calotte emboutie 22 et les parois de l'alvéole 1a sont assemblées par soudage. Un cordon de soudage 27 est représenté par un noircissement.

Sur la figure 10, sur laquelle les références aux éléments semblables à ceux de la figure 9 ont été reprises, la couronne 26 entoure encore la calotte emboutie 22 en étant disposée en contact avec la surface d'extrémité 25 de l'alvéole 1a. Les parois de l'alvéole 1a, la calotte emboutie 22 et la couronne 26 de renfort sont fixées par soudage lors d'une unique opération de soudage aboutissant à la formation d'un cordon de soudage représenté par un noircissement 27.

Les modes de réalisation et de fixation de 1a calotte emboutie 22 à l'extrémité d'un alvéole 1a représenté sur les figures 8 à 10 sont particulièrement adaptés pour des alvéoles externes situés aux extrémités latérales d'un réservoir.

Sur la figure 11, l'extrémité de l'alvéole 1a est fermée par une seconde calotte emboutie 28, et l'extrémité d'un alvéole adjacent 1b est fermée par une seconde calotte 29.

La première calotte emboutie 28 est en contact par son bord libre avec les surfaces d'extrémité frontale des parois de l'alvéole 1a. La seconde calotte emboutie 29 est en contact par son bord libre avec les surfaces d'extrémité frontale des parois de l'alvéole adjacent 1b. Les première et seconde calottes 28, 29 fermant deux alvéole adjacents 1a, 1b sont en contact avec la surface d'extrémité d'une portion intermédiaire rectiligne plate 3 commune aux deux alvéoles 1a, 1b et séparant les deux alvéoles 1a, 1b. La seconde calotte emboutie 29 est en contact avec la première calotte emboutie 28. Les première et seconde calottes embouties 28, 29 et la portion longitudinale plate intermédiaire 3 sont fixées à l'aide d'un unique cordon de soudage représenté par un noircissement 30.

Grâce à l'invention, on obtient un réservoir dont le volume interne est satisfaisant en comparaison avec le volume externe nécessaire à son logement, notamment dans un véhicule automobile. Le réservoir s'inscrit de façon améliorée dans un volume parallélépipédique. En outre, le réservoir peut être obtenu facilement par assemblage de profilé ou de profilés élémentaires dont les parois présentent en section une aire compatible avec les outils de fabrication conventionnel. Par ailleurs, les dimensions peuvent facilement être adaptées. Compte tenu de la réalisation des soudures longitudinales sur les profilés rectilignes, ce mode d'assemblage est peu coûteux et peut être avantageusement automatisé.

## Revendications

1. Réservoir pour fluides sous pression comprenant plusieurs alvéoles (1a, 1b, 1c) allongés parallèles juxtaposés, obturés à leurs deux extrémités longitudinales, **caractérisé par le fait que** chaque alvéole est défini par deux portions longitudinales opposées bombées (2) vers l'extérieur, reliées entre elles par deux portions longitudinales intermédiaires (3) opposées plates et parallèles, et en ce qu'un alvéole est défini par au moins deux profilés élémentaires (11, 12, 18, 19, 20, 21) longitudinaux assemblés suivant au moins deux lignes de soudure longitudinales (8).

2. Réservoir selon la revendication 1, **caractérisé par le fait qu'**un profilé élémentaire (4) comprend au moins une portion longitudinale de raccordement en Y.

3. Réservoir selon la revendication 2, **caractérisé par le fait que** ledit profile élémentaire (4) en Y raccorde deux portions longitudinales bombées et une portion longitudinale plate interne.

4. Réservoir selon l'une quelconque des revendications précédentes, **caractérisé par le fait que** des lignes de soudure longitudinales (8) sont situées dans la zone des portions longitudinales bombées (2), dans la zone des portions longitudinales plates (3) ou dans une zone de liaison des deux portions (4).

5. Réservoir selon l'une quelconque des revendications précédentes, **caractérisé par le fait qu'**un profilé élémentaire (11, 12) comprend au moins une partie de portion longitudinale plate (14, 3) et/ou une partie de portion longitudinale bombée (6).

6. Réservoir selon l'une quelconque des revendications précédentes, **caractérisé par le fait qu'**un profilé élémentaire (12, 21) comprend au moins une portion longitudinale de raccordement en Y, (4, 21) pour deux portions longitudinales bombées et une portion longitudinale plate interne.

7. Réservoir selon la revendication 1, **caractérisé par le fait que** des profils comprennent des parties de portions bombées destinées à être soudées à des parties de portions bombées correspondant à d'autre profilés pour former une portion bombées d'un alvéole.

8. Réservoir selon l'une quelconque des revendications précédentes, **caractérisé par le fait que** les portions longitudinales plates (3) des alvéoles présentent une largeur au moins égale à la moitié de leur distance réciproque, et de préférence une largeur au moins égale à leur distance réciproque.

9. Réservoir selon l'une quelconque des revendications précédentes, **caractérisé par le fait qu'**une portion longitudinale bombée (2) présente une section en demi-cercle ou une section en anse de panier ou un profil symétrique analogue à flèche réduite.

10. Réservoir selon l'une quelconque des revendications précédentes, **caractérisé par le fait qu'**un profilé comprend une portion longitudinale plate mince (3) prévue pour être accolée à une autre portion longitudinale plate mince en formant une double paroi.

11. Procédé de fabrication de réservoirs modulaires selon l'une quelconque des revendications précédentes, **caractérisé par le fait que**:
- on fournit les profilés élémentaires nécessaires pour constituer les parois longitudinales des alvéoles des réservoirs à fabriquer,
- on définit un alvéole par au moins deux profilés élémentaires (11, 12, 18, 19, 20, 21) longitudinaux assemblés suivant au moins deux lignes de soudure longitudinales (8),
- on assemble par soudage longitudinal les profilés élémentaires fournis,
- on découpe l'ensemble ainsi constitué en tronçons ayant la longueur nécessaire pour chaque réservoir à réaliser, et
- on obture chaque tronçon à ses extrémités par des pièces d'extrémité (22, 28, 29) fixées par soudage.

12. Procédé selon la revendication 11, **caractérisé par le fait que** les profilés ont de préférence une longueur correspondante à la longueur de plusieurs réservoirs

13. Procédé selon l'une des revendications 11 ou 12, **caractérisé par le fait que**, les profilés extrudés étant en aluminium ou en alliage d'aluminium, on assemble les profilés par soudage par friction ou par soudure laser.

14. Procédé selon l'une des revendications 11 à 13, **caractérisé par le fait que** la partie interne de la zone de liaison vient s'appuyer sur un renfort (9) interne pendant l'opération de soudage.

15. Procédé selon l'une des revendications 11 à 14, **caractérisé par le fait que** on forme une portion bombée d'un alvéole en utilisant des profiles comprenant des parties de portions bombées destinées à être soudées à des parties de portions bombées correspondant.
